# EUROPÄISCHE PATENTSCHRIFT

(11) **EP 4 484 644 B1**
(45) Veröffentlichungstag und Bekanntmachung des Hinweises auf die Patenterteilung: **04.02.2026**
(21) Anmeldenummer: 24176418.2
(22) Anmeldetag: 16.05.2024
(51) Int. Cl.: E01B 27/10, E01B 29/00, E01B 37/00

(54) **SCHIENENFAHRZEUG UND VERFAHREN ZUM VERLEGEN EINES KABELS ODER ROHRS**
RAIL VEHICLE AND METHOD FOR LAYING A CABLE OR PIPE
VÉHICULE FERROVIAIRE ET PROCÉDÉ POUR LA POSE D'UN CÂBLE OU D'UN TUYAU

(30) Priorität: 30.06.2023 AT 505222023
(43) Veröffentlichungstag der Anmeldung: 01.01.2025
(73) Patentinhaber: Swietelsky AG, 4020 Linz (AT)
(72) Erfinder: MIDL, Norbert, 8832 Oberwölz (AT)
(74) Vertreter: Weiser Voith Gugler Patentanwälte Partnerschaft

(56) Entgegenhaltungen:
- EP-A2- 2 213 794
- DE-A1- 102011 010 420
- US-B1- 6 193 440

## Beschreibung

Die vorliegende Erfindung betrifft ein Schienenfahrzeug und ein Verfahren zum Verlegen zumindest eines Kabels oder Rohrs neben einem vom Schienenfahrzeug in einer Arbeitsrichtung befahrenen, in einem Schotterbett liegenden Gleis.

Einerseits bietet sich das Verlegen neuer Kabel, z.B. elektrischer oder optischer Signal- oder Steuerkabel oder elektrischer Energiekabel, oder Rohre (einschließlich Schläuche) entlang bestehender Trassen eines Schienennetzes an, da in diesem Fall das Anlegen neuer Trassen entfällt. Andererseits ist eine Überflur-Verlegung aufgrund mangelnden Raums im Schienennetz kaum umsetzbar und eine Unterflur-Verlegung in der Praxis oft sehr aufwändig: Während des Verlegens ist der Bahnverkehr unterbrochen oder zumindest erheblich gestört; ein Verlegen direkt unter den Gleisen kommt aufgrund der schlechten Zugänglichkeit und der betriebsbedingten laufenden Belastung an dieser Stelle des Gleisunterbaus nicht in Frage; die Seitenbereiche neben den Gleisen wiederum sind oft sehr schmal und/oder für Baufahrzeuge schlecht zugänglich.

Für Gleise mit ausreichend breiten, gut zugänglichen Seitenbereichen ist bekannt, Kabel oder Rohre in U-förmigen Kanälen aus Beton zu verlegen. Dazu wird zunächst während nächtlicher Gleissperren z.B. mit einem Bagger ein Graben neben dem Gleis ausgehoben oder ausgefräst und eingesandet. Darin werden fertig gegossene U-förmige Betonsteine zu dem Kanal verlegt oder alternativ ein U-förmiger Kanal aus Beton gegossen. Da der Seitenbereich in weiterer Folge meist eingeschottert wird, muss der Kanal zuvor verdeckelt und danach noch einmal aufgedeckelt werden, um das oder die Kabel bzw. Rohre einzulegen, worauf der Kanal endgültig zugedeckelt werden kann.

In einem ebenfalls bekannten vereinfachten Verfahren werden direkt in den gefrästen Graben Erdkabel oder -rohre verlegt und der Graben danach mit Sand und/oder dem Aushubmaterial verfüllt und erforderlichenfalls eingeschottert. Dabei müssen die Erdkabel zu ihrem Schutz ausreichend tief im Erdreich verlegt, d.h. der Graben ausreichend tief ausgehoben sein.

In jedem Fall müssen die aufwändig mehrschrittigen Verfahren meist über mehrere Nächte verteilt ausgeführt werden. Ferner ist für die Verlegearbeiten und -maschinen ein breiter, gut zugänglicher Seitenbereich neben dem Gleis erforderlich. Dadurch wird das Verlegen der Kabel oder Rohre erschwert und oftmals sogar verhindert.

Die vorbekannte US 6 193 440 B1 beschreibt ein gattungsgemäßes Schienenfahrzeug zum Verlegen eines Kabels neben einem Schottergleis sowie ein zugehöriges Verfahren.

Die Erfindung setzt sich zum Ziel, ein Schienenfahrzeug und ein Verfahren zu schaffen, mit welchen Kabel und Rohre auch bei schmalen, schlecht zugänglichen Schienentrassen einfach und rasch verlegt werden können und nach dem Verlegen gut geschützt sind.

Dieses Ziel wird gemäß einem ersten Aspekt der Erfindung mit einem Schienenfahrzeug zum Verlegen zumindest eines Kabels oder Rohrs neben dem vom Schienenfahrzeug in Arbeitsrichtung befahrenen, im Schotterbett liegenden Gleis erreicht, das sich durch die Kombination der folgenden am Schienenfahrzeug montierten Einrichtungen auszeichnet:
eine Räumeinrichtung zum Abräumen von Altschotter an einer Flanke des Schotterbetts, um einen Randweg neben dem Gleis freizulegen;
einen der Räumeinrichtung in der Arbeitsrichtung nachgeordneten Verlegepflug zum Einpflügen des zumindest einen Kabels oder Rohrs in den freigelegten Randweg; und
eine dem Verlegepflug in der Arbeitsrichtung nachgeordnete Aufbringeinrichtung zum Aufbringen von Neuschotter auf die abgeräumte Flanke und den freigelegten Randweg.

Durch das Abräumen der Flanke des Schotterbetts und Freilegen des Randwegs ist ein besonders breiter Seitenbereich neben dem Gleis nicht erforderlich. Da das gesamte Verlegen vom Schienenfahrzeug aus erfolgt, ist auch eine separate Zugänglichkeit des Randwegs für Verlegemaschinen nicht erforderlich. Infolgedessen wird ein Verlegen auch entlang schmaler, schlecht zugänglicher Schienentrassen möglich, wo dies bisher unmöglich war. Weil überdies das gesamte Verlegen kontinuierlich in einer einzigen Vorwärtsbewegung des Schienenfahrzeug in Arbeitsrichtung erfolgt, ist es wesentlich effizienter und sind die Unterbrechungen des Bahnverkehrs deutlich kürzer als bei bisherigen Verfahren. Beim Einpflügen schneidet der Verlegepflug lediglich einen schmalen Spalt in den Randweg und legt das zumindest eine Kabel oder Rohr auf den Grund des Spalts, welcher sich hinter dem Verlegepflug wieder schließt. Ein besonders tiefes Einpflügen des zumindest einen Kabels oder Rohrs in den freigelegten Randweg ist nicht erforderlich, da das eingepflügte Kabel oder Rohr einerseits im Spalt und zusätzlich durch den auf die Flanke aufgebrachten Neuschotter gut geschützt ist. Das vereinfacht die Bauweise und erhöht die Lebensdauer des Verlegepflugs und reduziert den Umwelteingriff beim Verlegen.

Günstig ist, wenn die Räumeinrichtung dazu ausgebildet ist, beim Abräumen des Altschotters ferner eine Deckschicht des Randwegs abzugraben. Einerseits kommt das zumindest eine Kabel oder Rohr so bei gleicher Einpflügtiefe gegenüber dem Gleis tiefer zu liegen und ist dadurch auch besser gegen die betriebsbedingten mechanischen Belastungen geschützt. Andererseits dringt im Betrieb des Gleises in die Deckschicht häufig Schotter ein, welcher ein gleichmäßiges Einpflügen erschwert und den Spalt ungleichmäßig werden lässt. Nach dem Abtragen der Deckschicht ist der Randweg homogener und daher gleichmäßiger spaltbar und schließt sich der Spalt hinter dem Verlegepflug gleichmäßiger und zuverlässiger, sodass das zumindest eine eingepflügte Kabel oder Rohr besser geschützt ist.

Zum flexiblen Einsatz auch in wechselndem Gelände ist bevorzugt der Verlegepflug an einem beweglichen seitlichen Arm des Schienenfahrzeugs gelagert. Besonders vorteilhaft ist dabei, wenn der Arm hydraulisch ausschwenkbar ist. Dadurch kann der Verlegepflug mit üblichen hydraulischen Bordmitteln zwischen einer platzsparend eingeschwenkten Fahrstellung und verschiedenen, an die Erfordernisse angepassten ausgeschwenkten Arbeitsstellungen geschwenkt werden, um seine jeweilige Arbeitsstellung an die Flankenbreite anzupassen. Ebenfalls vorteilhaft ist, wenn der Arm hydraulisch höhenverstellbar ist. Dies ermöglicht eine besonders rasche flexible Anpassung des Verlegepflugs an die Randweg- und Geländeform.

In einer günstigen Ausführungsform hat der Arm an seinem äußeren Ende eine Montageplatte für den Verlegepflug, an welcher der Verlegepflug in unterschiedlichen Stellungen montierbar ist. Der Verlegepflug kann so an der Montageplatte gegenüber dem Arm verschwenkt und/oder gegenüber einer Mittelstellung in Höhe bzw. Seite versetzt montiert werden. Dadurch ist der Verlegepflug auch an sehr unterschiedliche Gegebenheiten flexibel anpassbar.

In einer weiteren bevorzugten Ausführungsform umfasst das Schienenfahrzeug einen Vorrat für das zumindest eine Kabel oder Rohr und eine Zufuhreinrichtung zum Zuführen des zumindest einen Kabels oder Rohrs vom Vorrat zum Verlegepflug. Auch lange Kabel- oder Rohrstrecken können auf diese Weise in einem Arbeitsgang verlegt werden.

Besonders günstig ist dabei, wenn die Zufuhreinrichtung an seitlichen Auslegern des Schienenfahrzeugs gelagert ist. Dadurch lässt sich z.B. eine bestehende schienengebundene Flankenprofiliermaschine mit geringfügigen Maßnahmen rasch zu einem erfindungsgemäßen Schienenfahrzeug ausbauen, wobei die Zufuhreinrichtung platzsparend angeordnet ist.

Vorteilhaft ist, wenn das Schienenfahrzeug einen zwischen dem Verlegepflug und der Aufbringeeinrichtung angeordneten Verdichter zum Verdichten des Randwegs über dem eingepflügten zumindest einen Kabel oder Rohr umfasst. Der Verdichter hilft, den vom Verlegepflug in den Randweg geschnittenen Spalt sicher über dem zumindest einen eingepflügten Kabel oder Rohr zu schließen und dadurch Kabel oder Rohr besser zu schützen und den Randweg für das Aufbringen des Neuschotters vorzubereiten.

Um den abgeräumten Altschotter nicht aufwändig separat abführen zu müssen, umfasst bevorzugt das Schienenfahrzeug einen Abraumspeicher für von der Räumeinrichtung abgeräumten Altschotter. Auch umfasst das Schienenfahrzeug bevorzugt einen Neuschotterspeicher für von der Aufbringeinrichtung aufzubringenden Neuschotter, um den Neuschotter nicht aufwändig separat zuführen zu müssen. Besonders günstig ist ferner, wenn das Schienenfahrzeug eine Schotterrezykliereinrichtung umfasst, welche dazu ausgebildet ist, zumindest einen Teil des von der Räumeinrichtung abgeräumten Altschotters zur Aufbringeinrichtung zurückzuführen. Dadurch muss zumindest ein Teil des Altschotters nicht abgeführt, zwischengespeichert bzw. entsorgt und zumindest ein Teil des Neuschotters nicht vorgehalten werden, was einerseits hilft, Ressourcen zu sparen, und andererseits die Reichweite des Schienenfahrzeugs beim Verlegen ohne Vergrößerung des Abraum- bzw. Neuschotterspeichers verlängert.

In einem zweiten Aspekt schafft die Erfindung ein Verfahren zum Verlegen zumindest eines Kabels oder Rohrs neben einem in einem Schotterbett liegenden Gleis, welches sich durch die folgenden kontinuierlich ausgeführten Schritte auszeichnet:
Abräumen von Altschotter an einer Flanke des Schotterbetts zum Freilegen eines Randwegs neben dem Gleis mittels einer Räumeinrichtung eines das Gleis in einer Arbeitsrichtung befahrenden Schienenfahrzeugs;
Einpflügen des zumindest einen Kabels oder Rohrs in den freigelegten Randweg mittels eines Verlegepflugs des Schienenfahrzeugs; und
Aufbringen von Neuschotter auf die abgeräumte Flanke und den freigelegten Randweg mittels einer Aufbringeinrichtung des Schienenfahrzeugs.

Alle Verfahrensschritte werden kontinuierlich ausführt und laufen somit gleichzeitig und in Arbeitsrichtung räumlich hintereinander ab. Hinsichtlich der Vorteile und weiterer Ausführungsvarianten des Verfahrens wird auf die vorstehenden Ausführungen zum erfindungsgemäßen Schienenfahrzeug verwiesen.

In einer vorteilhaften Ausführungsform umfasst das Verfahren einen zusätzlichen, zwischen dem Einpflügen und dem Aufbringen des Neuschotters ausgeführten Schritt des Aufbringens von feinkörnigem Unterkorn auf den Randweg über dem eingepflügten zumindest einen Kabel oder Rohr. Dadurch wird der Randweg und insbesondere der Spalt zusätzlich geschützt, z.B. gegen das Eindringen besonders scharfkantigen Neuschotters.

Die Erfindung wird nachstehend anhand eines in den beigeschlossenen Zeichnungen dargestellten Ausführungsbeispiels näher erläutert. In den Zeichnungen zeigen:
die Fig. 1a und 1b ein erfindungsgemäßes Schienenfahrzeug (Fig. 1a) zum Ausführen eines erfindungsgemäßen Verfahrens bzw. einen vergrößerten Ausschnitt (Fig. 1b) des Schienenfahrzeugs jeweils in einer schematischen Seitenansicht;
die Fig. 2a bis 2d eine Seite eines in einem Schotterbett liegenden Gleises vor dem Ausführen des Verfahrens (Fig. 2a) des Schienenfahrzeugs aus Fig. 1a, nach Ausführen eines ersten (Fig. 2b) und eines zweiten Verfahrensschritts (Fig. 2c) und nach Abschluss des Verfahrens (Fig. 2d) jeweils im Querschnitt;
die Fig. 3a und 3b einen Verlegepflug des Schienenfahrzeugs der Fig. 1a und 1b in einer teilweise geschnittenen Seitenansicht (Fig. 3a) und einer Rückansicht (Fig. 3b); und
die Fig. 4a und 4b den Verlegepflug der Fig. 3a und 3b mit einem diesen lagernden Arm des Schienenfahrzeugs der Fig. 1a und 1b in einer Seitenansicht (Fig. 4a) und einer Rückansicht (Fig. 4b).

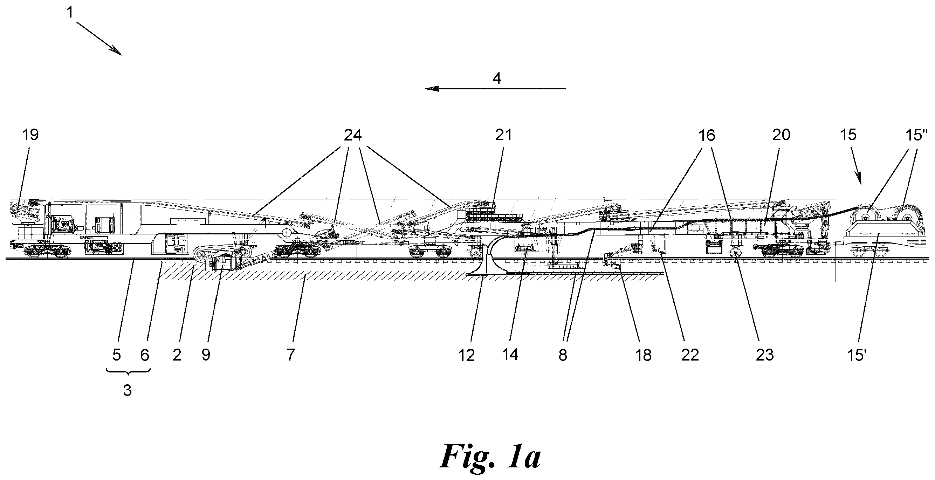

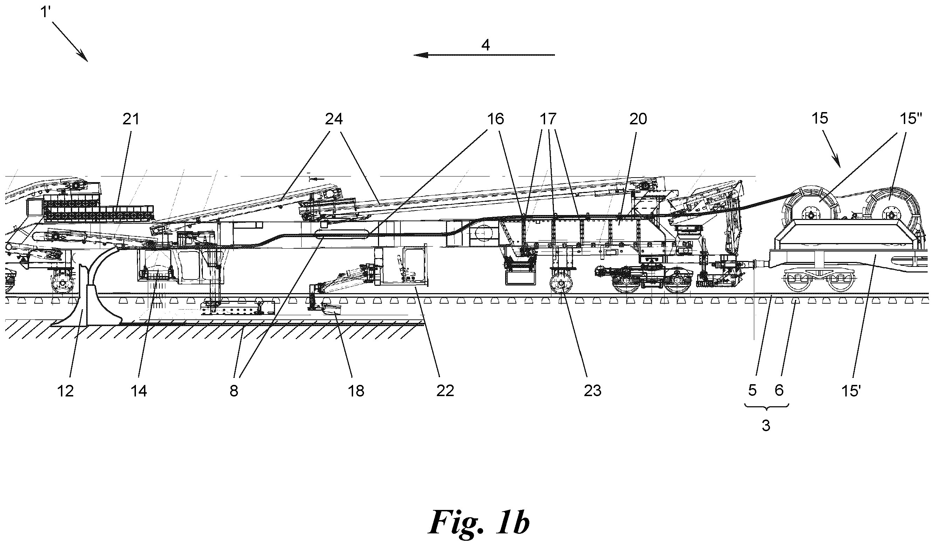

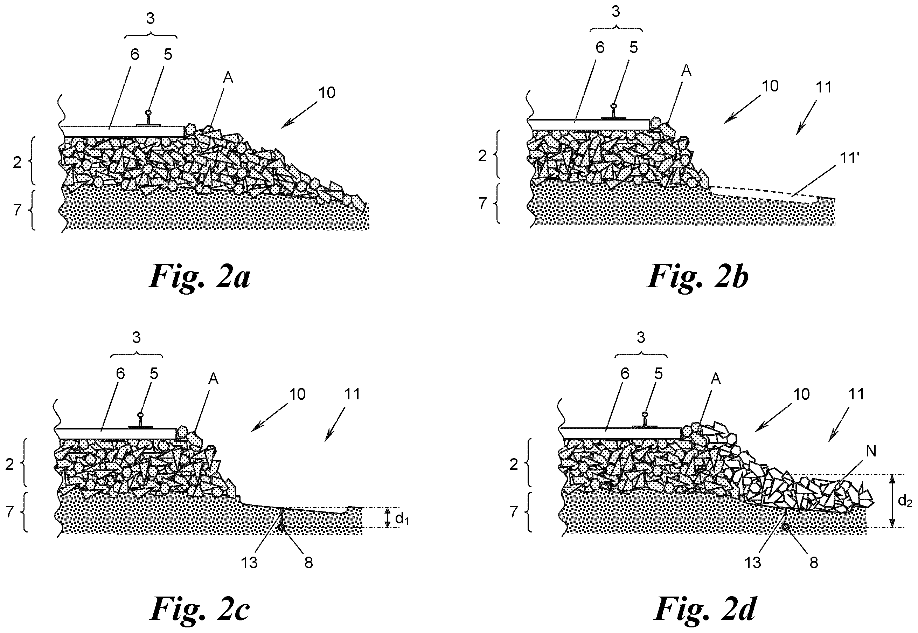

Die Fig. 1a und 1b zeigen ein Schienenfahrzeug 1 (Fig. 1a) bzw. einen vergrößerten Ausschnitt 1' des Schienenfahrzeugs 1 (Fig. 1b), welches ein in einem Schotterbett 2 liegendes Gleis 3 in einer Arbeitsrichtung 4 befährt. Hilfseinrichtungen des Schienenfahrzeugs 1, z.B. Antriebseinheiten, Steuerstände, Hebeeinrichtungen etc. sind nicht näher dargestellt. Das Gleis 3 besteht aus zwei parallelen Schienen 5 (in Fig. 2a: eine der beiden Schienen 5), die in bekannter Weise an Schwellen 6 verankert sind, welche die Schienen 5 verbinden. Die Schwellen 6 liegen im Schotterbett 2, das beispielsweise auf einen planierten Gleisunterbau 7 aufgebracht ist.

Anhand der Fig. 1a, 1b und 2a bis 2d soll im Folgenden ein Verfahren erläutert werden, welches das Schienenfahrzeug 1 ausführt, um zumindest ein Kabel oder Rohr 8 neben dem vom Schienenfahrzeug 1 in Arbeitsrichtung 4 befahrenen Gleis 3 zu verlegen. Dazu umfasst das Schienenfahrzeug 1 die folgenden Einrichtungen:
In Arbeitsrichtung 4 ganz vorne ist eine Räumeinrichtung 9 am Schienenfahrzeug 1 montiert, welche in einem ersten Verfahrensschritt an einer Flanke 10 des Schotterbetts 10 gelagerten Altschotter A abräumt, um einen Randweg 11 neben dem Gleis 3 freizulegen.

Im Vergleich zum Schotterbett 2 vor dem Abräumen (Fig. 2a) zeigt Fig. 2b das Ergebnis dieses ersten Verfahrensschritts: Schotter an der Flanke 10 ist abgeräumt und so der Verlauf der Flanke 10 wesentlich gleisnäher und steiler und der Randweg 11 freigelegt. Im dargestellten Beispiel hat die Räumeinrichtung 9 beim Abräumen des Altschotters A zusätzlich, wie dies optional möglich ist, auch eine (schraffiert dargestellte) Deckschicht 11' des Randwegs 11 abgegraben. In die Deckschicht 11' dringt üblicherweise im Betrieb des Gleises 3 Schotter ein, sodass die Deckschicht 11' meist inhomogen ist. Ein infolge des Abgrabens der inhomogenen Deckschicht 11' homogener Randweg 11 vereinfacht die weiteren Verfahrensschritte, ist jedoch nicht zwingende Voraussetzung des Verfahrens.

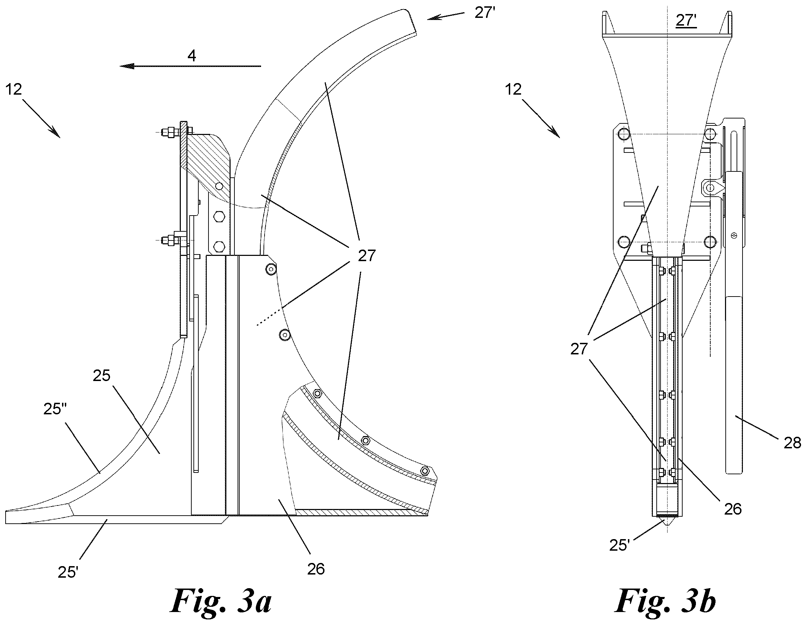

Der Räumeinrichtung 9 in Arbeitsrichtung 4 nachgeordnet ist ein Verlegepflug 12. Wie weiter unter unten unter Bezugnahme auf die Fig. 3a und 3b näher ausgeführt wird, pflügt der Verlegepflug 12 in einem zweiten Verfahrensschritt das zumindest eine Kabel oder Rohr 8 in den freigelegten Randweg 11 ein.

Fig. 2c zeigt das Ergebnis des zweiten Verfahrensschritts. Beim Einpflügen schneidet der Verlegepflug 12 einen Spalt 13 in den Randweg 11 und legt das (hier: einzige) Kabel (alternativ: mehrere Kabel und/oder Rohr/e) 8 auf den Grund des Spalts 13; hinter dem Verlegepflug 12 schließt sich der Spalt 13 zumindest weitgehend über dem/den Kabel/n oder Rohr/en 8.

In einem dritten Schritt bringt eine am Schienenfahrzeug 1 dem Verlegepflug 12 in Arbeitsrichtung 4 nachgeordnete Aufbringeinrichtung 14 Neuschotter N auf die abgeräumte Flanke 10 des Schotterbetts 2 und den freigelegten Randweg 11 auf.

Der aufgebrachte Neuschotter N sichert, wie in Fig. 2d dargestellt, das Schotterbett 2 seitlich und deckt den Randweg 11, den Spalt 13 und das in den Randweg 11 zumindest eine eingepflügte Kabel oder Rohr 8 zu seinem erhöhten Schutz ab.

Ein Vergleich der Darstellungen der Fig. 2c und 2d zeigt, dass infolge des Aufbringens des Neuschotters N das Kabel oder Rohr 8 in größerer Tiefe d₂ (Fig. 2d) und somit besser geschützt liegt als in jener Tiefe d₁, in welche es vom Verlegepflug 12 im zweiten Verfahrensschritt in den Randweg 11 eingepflügt wurde (Fig. 2c). Die sicher geschützte Verlegung ist so auch ohne aufwändiges tieferes Einpflügen des zumindest einen Kabels (oder Rohrs) 8 erzielbar.

Zwischen den beiden Schritten des Einpflügens des zumindest einen Kabels oder Rohrs 8 und des Aufbringens des Neuschotters N wird optional feinkörniges Unterkorn (nicht dargestellt) auf den Randweg 11 - insbesondere im Bereich über dem eingepflügten zumindest einen Kabel oder Rohr 8 aufgetragen, was den Spalt 13 und den Randweg 11 zusätzlich schützt z.B. vor dem Eindringen besonders scharfkantigen Neuschotters N.

Alle Verfahrensschritte zum Verlegen des zumindest einen Kabels oder Rohrs 8 neben dem Gleis 3 werden vom Schienenfahrzeug 1 kontinuierlich ausgeführt, u.zw. gleichzeitig jedoch in Arbeitsrichtung 4 hintereinander, sodass das Gleis 3 und sein Schotterbett 2 bereits nach einmaligem Befahren in Arbeitsrichtung 4 durch das Schienenfahrzeug 1 unter Ausführung des Verfahrens vollständig wiederhergestellt und befahrbar sind.

Im Beispiel der Fig. 1a und 1b hat das Schienenfahrzeug 1 einen optionalen Vorrat 15 für das zumindest eine Kabel oder Rohr 8, hier: einen angekuppelten Vorratswagen 15', von welchem das zumindest eine Kabel oder Rohr 8 z.B. auf Trommeln 15" aufgerollt vorgehalten wird, um mithilfe einer Zufuhreinrichtung 16, z.B. eines Förderbandes oder eines oder mehrerer Gleitstücke, aus dem Vorrat 15 dem Verlegepflug 12 zugeführt zu werden. Die Zuführeinrichtung 16 ist ein oder mehrteilig und verläuft entweder im Inneren des Schienenfahrzeugs 1 oder ist, wie im dargestellten Beispiel, an seitlichen Auslegern 17 des Schienenfahrzeugs 1 gelagert.

Alternativ zum Vorrat 15 könnte das zumindest eine Kabel oder Rohr 8 z.B. am Boden neben dem Gleis 3 bzw. seinem Schotterbett 2 abgelegt und vom Verlegepflug 12 aufgenommen und in den Randweg 11 eingepflügt werden; oder das zumindest eine Kabel oder Rohr 8 wird auf einem separaten Wagen (nicht dargestellt) vorgehalten und von dort aus dem Verlegepflug 12 zugeführt.

In einer weiteren optionalen Ausführungsform des Schienenfahrzeugs 1 hat dieses ferner einen zwischen dem Verlegepflug 12 und der Aufbringeinrichtung 14 angeordneten Verdichter (nicht dargestellt), welcher zwischen den Schritten des Einpflügens und des Aufbringens des Neuschotters N - ebenfalls kontinuierlich - einen Schritt des Verdichtens des Randwegs 11 über dem eingepflügten zumindest einen Kabel oder Rohr 8 ausführt. Im optionalen Fall, dass hinter dem Verlegepflug 12 Unterkorn auf den Randweg 11 aufgebracht wird, kann der Schritt des Verdichtens in Arbeitsrichtung 4 dem Aufbringen des Unterkorns nachgeordnet sein und das zuvor aufgebrachte Unterkorn mitverdichtet werden oder vorgeordnet sein. Es versteht sich, dass anstelle eines einzigen auch mehrere Verdichter am Schienenfahrzeug 1 montiert sein könnten, von welchen optional zumindest einer in Arbeitsrichtung 4 der Aufbringeinrichtung 14 nachgeordnet sein könnte, oder überhaupt nur ein in Arbeitsrichtung 4 der Aufbringeinrichtung 14 nachgeordneter Verdichter 18, welcher den auf den Randweg 11 aufgebrachten Neuschotter N verdichtet.

Im Beispiel der Fig. 1a umfasst das Schienenfahrzeug 1 ferner einen optionalen Abraumspeicher 19 für von der Räumeinrichtung 9 abgeräumten Altschotter A (samt Verunreinigungen). Außerdem umfasst das Schienenfahrzeug 1 in diesem Beispiel einen optionalen Neuschotterspeicher 20 für von der Aufbringeinrichtung 14 aufzubringenden Neuschotter N. Schließlich hat das dargestellte Schienenfahrzeug 1 eine optionale Schotterrezykliereinrichtung 21, die dazu ausgebildet ist, zumindest einen Teil des von der Räumeinrichtung 9 abgeräumten Altschotters A zur Aufbringeinrichtung 14 zurückzuführen. Die Schotterrezykliereinrichtung 21 bereitet abgeräumten Altschotter A durch Reinigen, Aussieben und/oder Schärfen auf, um ihn für die Aufbringeinrichtung 14 wiederverwendbar zu machen. Dabei kann optional als Unterkorn geeignetes Material getrennt ausgesiebt, gespeichert bzw. zum Aufbringen vorgehalten werden.

Im dargestellten Beispiel umfasst das Schienenfahrzeug 1 ferner mehrere Kabinen 22 für Bedienpersonal, Messzellen 23, Fördereinheiten 24 etc., wie dem Fachmann bekannt ist.

Gemäß den Fig. 3a und 3b hat der Verlegepflug 12 an seiner Vorderseite einen ebenen Meißel 25 mit im Wesentlichen gerader Unterseite 25' und optional gekrümmter vorderer Schneide 25". Mit seiner Schneide 25" schneidet der Meißel 25 des Verlegepflugs 12 infolge der Fortbewegung des Schienenfahrzeugs 1 in Arbeitsrichtung 4 den Spalt 13 in den Randweg 11. Unmittelbar an der Rückseite des Meißels 25 und etwa bündig zu seiner Unterseite 25' schließt das Gehäuse 26 eines gekrümmten Zufuhrkanals 27 an und hält den Spalt 13 somit entgegen dem seitlichen Druck des umgebenden Bodens offen. Entlang seiner Krümmung führt der Zufuhrkanal 27 beim Einpflügen das zumindest eine Kabel oder Rohr 8 in derselben Geschwindigkeit, in der sich das Schienenfahrzeug 1 in Arbeitsrichtung 4 fortbewegt, bis zum Grund des Spalts 13. Dazu ist der Zufuhrkanal 27 an seinem Eingang 27' optional trichterförmig erweitert, um das Einführen des zumindest einen Kabels oder Rohrs 8 zu erleichtern, und mündet in den Spalt 13, u.zw. in Grundnähe und in spitzem Winkel zum Grund des Spalts 13. Hinter dem Verlegepflug 12 schließt sich der Spalt 13 aufgrund des seitlichen Bodendrucks wieder weitgehend oder vollständig.

Im dargestellten Beispiel hat der Verlegepflug 12 ferner einen optionalen Pflugschild 28 (Fig. 3b) zur Einstellung und einfachen visuellen Überwachung der Einpflügtiefe t₁. Es versteht sich, dass der Verlegepflug 12 anstelle eines einzigen Kabels oder Rohrs 8 mehrere parallele Kabel oder Rohre 8 und ebenso ein oder mehrere Kabel 8 mit einem oder mehreren Rohren 8 gleichzeitig über den Zufuhrkanal 27 in den Spalt 13 des Randwegs 11 einpflügen kann, solange der Zufuhrkanal 27 ausreichend groß ist und die Kabeln und/oder Rohre 8 ausreichend biegsam sind. Unter dem Begriff "Rohr" ist in diesem Zusammenhang jeder längliche Hohlkörper zu verstehen, der zum Einpflügen ausreichend biegsam ist, d.h. insbesondere ein Schlauch od. dgl.

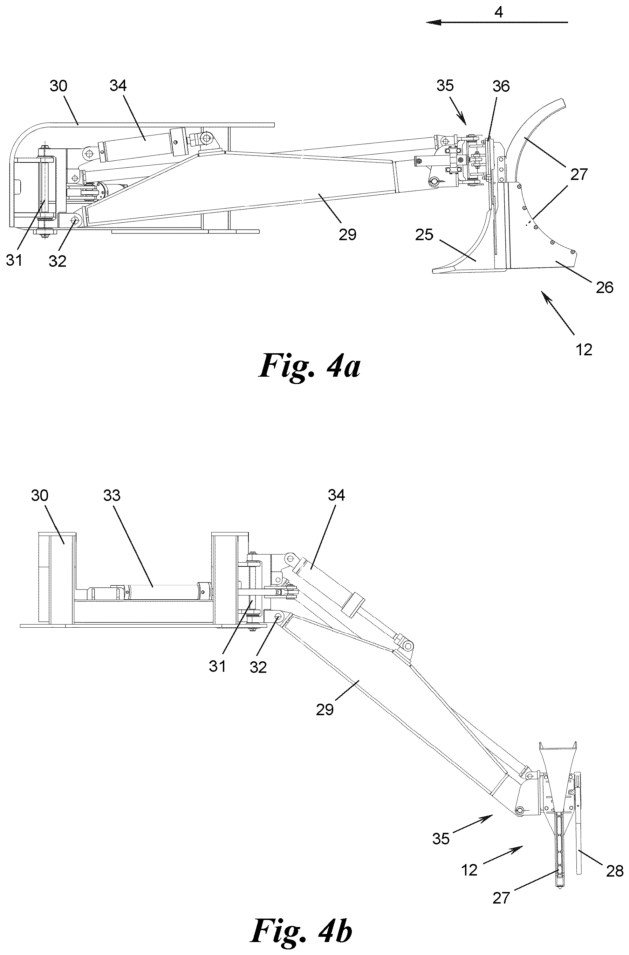

Die Fig. 4a und 4b zeigen eine beispielhafte Ausführungsform eines beweglichen seitlichen Arms 29 des Schienenfahrzeugs 1, an welchem der Verlegepflug 12 optional gelagert ist. Der Arm 29 ist seitlich am Schienenfahrzeug ausschwenkbar und/oder höhenverstellbar, z.B. jeweils hydraulisch. Im dargestellten Beispiel ist der Arm 29 dazu an einem Tragrahmen 30 des Schienenfahrzeugs 1 über jeweils ein horizontales und ein vertikales Schwenklager 31, 32 gelagert und mit jeweils einem horizontalen und einem vertikalen Hydraulikzylinder 33, 34 verschwenkbar.

An dem dem Tragrahmen 30 abgewandten äußeren Ende 35 des Arms 29 ist in diesem Beispiel der Verlegepflug 12 montiert. Optional hat der Arm 29 dazu am äußeren Ende 35 eine Montageplatte 36, an welcher der Verlegepflug 12 in unterschiedlichen Stellungen montiert werden kann, d.h. in unterschiedlicher Höhe, mit unterschiedlichem seitlichen Versatz und/oder in unterschiedlichem Neigungswinkel gegenüber der Vertikalen.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Schienenfahrzeug zum Verlegen zumindest eines Kabels oder Rohrs (8) neben einem vom Schienenfahrzeug (1) in einer Arbeitsrichtung (4) befahrenen, in einem Schotterbett (2) liegenden Gleis (3), **gekennzeichnet durch** die Kombination der folgenden am Schienenfahrzeug (1) montierten Einrichtungen:
eine Räumeinrichtung (9) zum Abräumen von Altschotter (A) an einer Flanke (10) des Schotterbetts (2), um einen Randweg (11) neben dem Gleis (3) freizulegen;
einen der Räumeinrichtung (9) in der Arbeitsrichtung (4) nachgeordneten Verlegepflug (12) zum Einpflügen des zumindest einen Kabels oder Rohrs (8) in den freigelegten Randweg (11); und
eine dem Verlegepflug (12) in der Arbeitsrichtung (4) nachgeordnete Aufbringeinrichtung (14) zum Aufbringen von Neuschotter (N) auf die abgeräumte Flanke (10) und den freigelegten Randweg (11).

2. Schienenfahrzeug nach Anspruch 1, **dadurch gekennzeichnet, dass** die Räumeinrichtung (9) dazu ausgebildet ist, beim Abräumen des Altschotters (A) ferner eine Deckschicht (11') des Randwegs (11) abzugraben.

3. Schienenfahrzeug nach Anspruch 1 oder 2, **dadurch gekennzeichnet, dass** der Verlegepflug (12) an einem beweglichen seitlichen Arm (29) des Schienenfahrzeugs (1) gelagert ist.

4. Schienenfahrzeug nach Anspruch 3, **dadurch gekennzeichnet, dass** der Arm (29) hydraulisch ausschwenkbar ist.

5. Schienenfahrzeug nach Anspruch 3 oder 4, **dadurch gekennzeichnet, dass** der Arm (29) hydraulisch höhenverstellbar ist.

6. Schienenfahrzeug nach einem der Ansprüche 3 bis 5, **dadurch gekennzeichnet, dass** der Arm (29) an seinem äußeren Ende (35) eine Montageplatte (36) für den Verlegepflug (12) hat, an welcher der Verlegepflug (12) in unterschiedlichen Stellungen montierbar ist.

7. Schienenfahrzeug nach einem der Ansprüche 1 bis 6, **dadurch gekennzeichnet, dass** das Schienenfahrzeug (1) einen Vorrat (15) für das zumindest eine Kabel oder Rohr (8) und eine Zufuhreinrichtung (16) zum Zuführen des zumindest einen Kabels oder Rohrs (8) vom Vorrat (15) zum Verlegepflug (12) umfasst.

8. Schienenfahrzeug nach Anspruch 7, **dadurch gekennzeichnet, dass** die Zufuhreinrichtung (16) an seitlichen Auslegern (17) des Schienenfahrzeugs (1) gelagert ist.

9. Schienenfahrzeug nach einem der Ansprüche 1 bis 8, **dadurch gekennzeichnet, dass** das Schienenfahrzeug (1) einen zwischen dem Verlegepflug (12) und der Aufbringeeinrichtung (14) angeordneten Verdichter zum Verdichten des Randwegs (11) über dem eingepflügten zumindest einen Kabel oder Rohr (8) umfasst.

10. Schienenfahrzeug nach einem der Ansprüche 1 bis 9, **dadurch gekennzeichnet, dass** das Schienenfahrzeug (1) einen Abraumspeicher (19) für von der Räumeinrichtung (9) abgeräumten Altschotter (A) umfasst.

11. Schienenfahrzeug nach einem der Ansprüche 1 bis 10, **dadurch gekennzeichnet, dass** das Schienenfahrzeug (1) einen Neuschotterspeicher (20) für von der Aufbringeinrichtung (14) aufzubringenden Neuschotter (N) umfasst.

12. Schienenfahrzeug nach einem der Ansprüche 1 bis 11, **dadurch gekennzeichnet, dass** das Schienenfahrzeug (1) eine Schotterrezykliereinrichtung (21) umfasst, welche dazu ausgebildet ist, zumindest einen Teil des von der Räumeinrichtung (9) abgeräumten Altschotters (A) zur Aufbringeinrichtung (14) zurückzuführen.

13. Verfahren zum Verlegen zumindest eines Kabels oder Rohrs (8) neben einem in einem Schotterbett (2) liegenden Gleis (3), **gekennzeichnet durch** die kontinuierlich ausgeführten Schritte:
Abräumen von Altschotter (A) an einer Flanke (10) des Schotterbetts (2) zum Freilegen eines Randwegs (11) neben dem Gleis (3) mittels einer Räumeinrichtung (9) eines das Gleis (3) in einer Arbeitsrichtung (4) befahrenden Schienenfahrzeugs (1);
Einpflügen des zumindest einen Kabels oder Rohrs (8) in den freigelegten Randweg (11) mittels eines Verlegepflugs (12) des Schienenfahrzeugs (1); und
Aufbringen von Neuschotter (N) auf die abgeräumte Flanke (10) und den freigelegten Randweg (11) mittels einer Aufbringeinrichtung (14) des Schienenfahrzeugs (1).

14. Verfahren nach Anspruch 13, **gekennzeichnet durch** zusätzliches Abgraben einer Deckschicht (11') des Randwegs (11) mittels der Räumeinrichtung (9) im genannten Schritt des Abräumens.

15. Verfahren nach Anspruch 13 oder 14, **gekennzeichnet durch** den zusätzlichen, zwischen dem Einpflügen und dem Aufbringen des Neuschotters (N) ausgeführten Schritt des Aufbringens von feinkörnigem Unterkorn auf den Randweg (11) über dem eingepflügten zumindest einen Kabel oder Rohr (8).

16. Verfahren nach einem der Ansprüche 13 bis 15, **gekennzeichnet durch** den zusätzlichen, zwischen dem Einpflügen und dem Aufbringen ausgeführten Schritt des Verdichtens des Randwegs (11) über dem eingepflügten zumindest einen Kabel oder Rohr (8) mit einem Verdichter.

## Claims

1. A rail vehicle for laying at least one cable or pipe (8) beside a track (3) travelled on by the rail vehicle (1) in a working direction (4) and lying in a ballast bed (2), **characterised by** the combination of the following devices mounted on the rail vehicle (1):
a clearing device (9) for clearing old ballast (A) on a flank (10) of the ballast bed (2) in order to expose a side path (11) beside the track (3);
a laying plough (12) arranged downstream of the clearing device (9) in the working direction (4) for ploughing-in the at least one cable or pipe (8) into the exposed side path (11); and
an application device (14) arranged downstream of the laying plough (12) in the working direction (4) for applying new ballast (N) onto the cleared flank (10) and the exposed side path (11).

2. The rail vehicle according to claim 1, **characterised in that** the clearing device (9) is configured, when clearing the old ballast (A), to further dig-off a cover layer (11') of the side path (11).

3. The rail vehicle according to claim 1 or 2, **characterised in that** the laying plough (12) is mounted on a movable lateral arm (29) of the rail vehicle (1).

4. The rail vehicle according to claim 3, **characterised in that** the arm (29) can be swung out hydraulically.

5. The rail vehicle according to claim 3 or 4, **characterised in that** the arm (29) can be height-adjusted hydraulically.

6. The rail vehicle according to any one of claims 3 to 5, **characterised in that** the arm (29) has, at its outer end (35), a mounting plate (36) for the laying plough (12), on which mounting plate the laying plough (12) can be mounted in different positions.

7. The rail vehicle according to any one of claims 1 to 6, **characterised in that** the rail vehicle (1) comprises a supply (15) for the at least one cable or pipe (8) and a feed device (16) for feeding the at least one cable or pipe (8) from the supply (15) to the laying plough (12).

8. The rail vehicle according to claim 7, **characterised in that** the feed device (16) is mounted on lateral booms (17) of the rail vehicle (1).

9. The rail vehicle according to any one of claims 1 to 8, **characterised in that** the rail vehicle (1) comprises a compactor arranged between the laying plough (12) and the application device (14) for compacting the side path (11) above the ploughed-in at least one cable or pipe (8).

10. The rail vehicle according to any one of claims 1 to 9, **characterised in that** the rail vehicle (1) comprises a clearing storage (19) for old ballast (A) cleared by the clearing device (9).

11. The rail vehicle according to any one of claims 1 to 10, **characterised in that** the rail vehicle (1) comprises a new ballast storage (20) for new ballast (N) to be applied by the application device (14).

12. The rail vehicle according to any one of claims 1 to 11, **characterised in that** the rail vehicle (1) comprises a ballast recycling device (21) which is configured to return at least a part of the old ballast (A) cleared by the clearing device (9) to the application device (14).

13. A method for laying at least one cable or pipe (8) beside a track (3) lying in a ballast bed (2), **characterised by** the steps carried out continuously:
clearing old ballast (A) on a flank (10) of the ballast bed (2) for exposing a side path (11) beside the track (3) by means of a clearing device (9) of a rail vehicle (1) travelling on the track (3) in a working direction (4);
ploughing-in the at least one cable or pipe (8) into the exposed side path (11) by means of a laying plough (12) of the rail vehicle (1); and
applying new ballast (N) to the cleared flank (10) and the exposed side path (11) by means of an application device (14) of the rail vehicle (1).

14. The method according to claim 13, **characterised by** further digging-off a cover layer (11') of the side path (11) by means of the clearing device (9) in said clearing step.

15. The method according to claim 13 or 14, **characterised by** the further step, carried out between the ploughing-in and the application of the new ballast (N), of applying fine-grained sub-grain to the side path (11) above the ploughed-in at least one cable or pipe (8).

16. The method according to any one of claims 13 to 15, **characterised by** the further step, carried out between the ploughing-in and the application, of compacting the side path (11) above the ploughed-in at least one cable or pipe (8) with a compactor.

## Revendications

1. Véhicule ferroviaire pour la pose d'au moins un câble ou tuyau (8) à côté d'une voie (3) empruntée par le véhicule ferroviaire (1) dans un sens de travail (4) et reposant dans un lit de ballast (2), **caractérisé par** la combinaison des dispositifs suivants montés sur le véhicule ferroviaire (1) :
un dispositif de déblaiement (9) pour le déblaiement de vieux ballast (A) sur un flanc (10) du lit de ballast (2) afin de dégager un chemin de bordure (11) à côté de la voie (3) ;
une charrue de pose (12) disposée dans le sens de travail (4) en aval du dispositif de déblaiement (9) pour l'enfouissement de l'au moins un câble ou tuyau (8) dans le chemin de bordure (11) dégagé ; et
un dispositif de dépose (14) disposé dans le sens de travail (4) en aval de la charrue de pose (12) pour la dépose de nouveau ballast (N) sur le flanc (10) déblayé et le chemin de bordure (11) dégagé.

2. Véhicule ferroviaire selon la revendication 1, **caractérisé en ce que** le dispositif de déblaiement (9) est conçu, lors du déblaiement du vieux ballast (A), pour en outre enlever une couche de recouvrement (11') du chemin de bordure (11).

3. Véhicule ferroviaire selon la revendication 1 ou 2, **caractérisé en ce que** la charrue de pose (12) est montée sur un bras (29) latéral mobile du véhicule ferroviaire (1).

4. Véhicule ferroviaire selon la revendication 3, **caractérisé en ce que** le bras (29) est pivotable de manière hydraulique.

5. Véhicule ferroviaire selon la revendication 3 ou 4, **caractérisé en ce que** le bras (29) est réglable en hauteur de manière hydraulique.

6. Véhicule ferroviaire selon l'une des revendications 3 à 5, **caractérisé en ce que** le bras (29) possède sur son extrémité (35) extérieure un plateau de montage (36) pour la charrue de pose (12) sur lequel la charrue de pose (12) peut être montée dans diverses positions.

7. Véhicule ferroviaire selon l'une des revendications 1 à 6, **caractérisé en ce que** le véhicule ferroviaire (1) comprend une réserve (15) pour l'au moins un câble ou tuyau (8) et un dispositif d'approvisionnement (16) pour l'approvisionnement de l'au moins un câble ou tuyau (8) depuis la réserve (15) jusqu'à la charrue de pose (12).

8. Véhicule ferroviaire selon la revendication 7, **caractérisé en ce que** le dispositif d'approvisionnement (16) est logé sur des flèches (17) latéraux du véhicule ferroviaire (1).

9. Véhicule ferroviaire selon l'une des revendications 1 à 8, **caractérisé en ce que** le véhicule ferroviaire (1) comprend un compresseur disposé entre la charrue de pose (12) et le dispositif de dépose (14) pour la compression du chemin de bordure (11) au-dessus de l'au moins un câble ou tuyau (8) enfoui.

10. Véhicule ferroviaire selon l'une des revendications 1 à 9, **caractérisé en ce que** le véhicule ferroviaire (1) comprend un dépôt de déblais (19) pour le vieux ballast (A) déblayé par le dispositif de déblaiement (9).

11. Véhicule ferroviaire selon l'une des revendications 1 à 10, **caractérisé en ce que** le véhicule ferroviaire (1) comprend un dépôt de nouveau ballast (20) pour le nouveau ballast (N) à déposer par le dispositif de dépose (14).

12. Véhicule ferroviaire selon l'une des revendications 1 à 11, **caractérisé en ce que** le véhicule ferroviaire (1) comprend un dispositif de recyclage de ballast (21), lequel est conçu pour recycler au moins une partie du vieux ballast (A) déblayé par le dispositif de déblaiement (9) vers le dispositif de dépose (14).

13. Procédé de pose d'au moins un câble ou tuyau (8) à côté d'une voie (3) reposant dans un lit de ballast (2), **caractérisé par** les étapes exécutées en continu :
le déblaiement de vieux ballast (A) sur un flanc (10) du lit de ballast (2) afin de dégager un chemin de bordure (11) à côté de la voie (3) au moyen d'un dispositif de déblaiement (9) d'un véhicule ferroviaire (1) empruntant la voie (3) dans un sens de travail (4) ;
l'enfouissement de l'au moins un câble ou tuyau (8) dans le chemin de bordure (11) dégagé au moyen d'une charrue de pose (12) du véhicule ferroviaire (1) ; et
la dépose de nouveau ballast (N) sur le flanc (10) déblayé et le chemin de bordure (11) dégagé au moyen d'un dispositif de dépose (14) du véhicule ferroviaire (1).

14. Procédé selon la revendication 13, **caractérisé par** une enlèvement additionnelle d'une couche de recouvrement (11') du chemin de bordure (11) au moyen du dispositif de déblaiement (9) dans ladite étape de déblaiement.

15. Procédé selon la revendication 13 ou 14, **caractérisé par** l'étape additionnelle de dépose de sous-grains à grains fins sur le chemin de bordure (11) au-dessus de l'au moins un câble ou tuyau (8) enfoui exécutée entre l'enfouissement et la dépose de nouveau ballast (N).

16. Procédé selon l'une des revendications 13 à 15, **caractérisé par** l'étape additionnelle de compression du chemin de bordure (11) au-dessus de l'au moins un câble ou tuyau (8) enfoui avec un compresseur, exécutée entre l'enfouissement et la dépose.
